# EUROPEAN PATENT APPLICATION

(11) **EP 4 779 936 A1**
(43) Date of publication of application: **22.07.2026**
(21) Application number: 26151191.9
(22) Date of filing: 09.01.2026
(51) Int. Cl.: H04L 12/46, H04L 45/00, H04L 45/24, H04L 45/02, H04L 47/125

(54) **TRANSPARENT HIGH AVAILABILITY MULTI-LINK CONNECTIVITY OF EDGE DEVICES**

(30) Priority: 16.01.2025 US 202519024646
(71) Applicant: Zscaler, Inc., San Jose, CA 95134 (US)
(72) Inventor: BABU, Thilak Raj Surendra, San Jose (US); VERMA, Ravinder, San Jose (US); PRABHU, Thekkar Nishanth, Sunnyvale (US)
(74) Representative: Dehns

(57) **Abstract**

An edge device (10), disposed at a branch network (50, 100) and configured to connect the branch network (50, 100) to a wide area network (WAN) via one or more WAN ports (22), includes circuitry comprising one or more processors (12) and memory (14) configured to: interconnect with a plurality of local area network (LAN) interfaces (24) associated with a plurality of LAN ports (26) in the branch network (50, 100); form, over the plurality of LAN interfaces (24), a set of logical tunnels (102, 104) for high-availability (HA) traffic associated with clustering of a plurality of edge devices (10-1, 10-2, 10-3) in the branch network (50, 100); and distribute the HA traffic across the set of logical tunnels (102, 104) to provide redundancy and resilience if one of the plurality of LAN interfaces (24) fails or becomes congested.

## Description

### FIELD OF THE DISCLOSURE

The present disclosure relates generally to networking and computing. More particularly, the present disclosure relates to systems and methods for transparent high availability multi-link connectivity of edge devices.

### BACKGROUND OF THE DISCLOSURE

An edge device-also known as a branch gateway, branch connector, customer premises equipment (CPE), or similar terminology-is a network element located at a remote branch site that provides secure, efficient connectivity to external networks, such as the internet or a corporate wide area network (WAN). A branch, in this context, is a geographically separate office or facility of an organization that needs reliable, managed access to central resources, data centers, and cloud services. By positioning the edge device at the boundary of the local network, it can integrate essential functions-such as routing, security enforcement (e.g., firewalls, intrusion detection/prevention, content filtering), traffic optimization (e.g., WAN acceleration, software defined-WAN (SD-WAN) capabilities), and policy management-into a single platform. This consolidation streamlines the network architecture, reduces the need for multiple dedicated appliances, and provides a consistent, centralized point for applying enterprise-wide policies. Additionally, these edge devices often serve as on-ramps to cloud-based services, including security and application delivery platforms, enabling direct and more efficient traffic forwarding without backhauling data through a central site.

### BRIEF SUMMARY OF THE DISCLOSURE

From a physical perspective, an edge device typically comes in a form factor that supports multiple network interfaces-both LAN- and WAN-facing-allowing it to connect internal networks, external links (like broadband or multiprotocol label switching (MPLS) circuits), and potentially additional infrastructure components. In deployments where high availability (HA) is critical, organizations may install multiple edge devices at the same branch site, creating redundancy and improving resilience. Conventionally, maintaining HA pairs or clusters requires a dedicated direct link-an "HA link"-between the devices. While essential for state synchronization and seamless failover, this dedicated HA link consumes valuable physical ports on each edge device. As a result, deploying multiple edge devices can reduce port density, increase hardware complexity, and introduce single points of failure if the dedicated HA link is compromised.

To address the limitations associated with using a dedicated direct HA link between edge devices, the present disclosure introduces systems and methods for transparent high-availability multi-link connectivity. In this approach, the high-availability (HA) control traffic is not restricted to a single dedicated link. Instead, tunnels are dynamically formed over multiple available LAN ports, effectively distributing the HA traffic across all accessible network connections. This design leverages advanced network interface card (NIC) capabilities and intelligent traffic steering to ensure optimal performance, fault tolerance, and efficient resource utilization. This multi-link, tunnel-based approach to HA connectivity transforms the edge device architecture by replacing a single, dedicated HA link with a flexible, robust, and scalable design. It not only improves reliability and bandwidth availability but also significantly enhances overall efficiency, port utilization, and quality of service for both control and data traffic.

### BRIEF DESCRIPTION OF THE DRAWINGS

The present disclosure is detailed through various drawings, where like components or steps are indicated by identical reference numbers for clarity and consistency.
FIG. 1 illustrates a block diagram of an example edge device, highlighting various functional components.
FIG. 2 illustrates a network diagram of an example branch network employing a conventional, dedicated-link approach to high availability (HA) clustering.
FIG. 3 illustrates a network diagram of an example branch network that employs a transparent high-availability (HA) link approach for clustering multiple edge devices.
FIG. 4 illustrates a flowchart of a process performed by an edge device situated at a branch network and connected to a wide area network (WAN).
FIG. 5 illustrates a sequence diagram of an example discovery process.
FIG. 6 illustrates a flowchart illustrating a process of how an edge device (or similar node) both discovers peers for high availability (HA) tunnels and forwards customer traffic once the tunnels are established.

### DETAILED DESCRIPTION OF THE DISCLOSURE

To overcome the limitations of dedicated high-availability (HA) links, the present disclosure employs multiple LAN ports, creating tunnels that distribute HA traffic across all available connections rather than relying on a single, dedicated interface. By doing so, it builds redundancy into the HA architecture, enhancing resilience and reliability even if one link fails. The aggregated bandwidth from multiple ports improves overall performance, while the removal of a dedicated HA link port frees up valuable interfaces for other traffic, increasing port efficiency. Further, advanced NIC capabilities enable prioritization of HA traffic through separate queues, ensuring that critical control data is not overshadowed by general network traffic. Together, these innovations result in a more flexible, robust, and scalable system for maintaining high availability in edge device deployments.

Key benefits of this multi-link, tunnel-based HA strategy include:
(1) Redundancy for HA Links: By supporting HA traffic across multiple LAN interfaces and not relying on a single direct connection, the system inherently provides path diversity. If one link fails or experiences degradation, another link seamlessly takes over without disrupting the HA state maintenance, thus increasing the resilience and reliability of the overall deployment.
(2) Enhanced Bandwidth Utilization: Aggregating multiple LAN ports for HA traffic effectively increases the total available bandwidth for control and synchronization activities. Unlike a single, dedicated HA link that may become a bottleneck, this approach ensures that HA traffic can dynamically utilize the combined throughput of multiple connections, resulting in more efficient and stable performance, especially during high-traffic periods.
(3) Improved Port Efficiency: The absence of a dedicated, single-purpose HA port allows all ports to serve both regular data and HA traffic simultaneously. This eliminates "wasted" ports reserved solely for HA functions, enabling better port density and maximizing the value of existing hardware. Network administrators no longer need to sacrifice a valuable port that could otherwise be used for handling user or application data.
(4) Prioritized HA Traffic via NIC-Level Traffic Steering: By utilizing modern NIC capabilities-such as hardware-based traffic shaping, quality-of-service (QoS) queues, and offloaded traffic steering-control (HA) traffic can be assigned its own dedicated queue. This ensures that critical synchronization signals and state updates are transmitted with priority, preventing user data flows from overshadowing or overwhelming the essential control plane traffic. As a result, the HA process remains both predictable and efficient, even under conditions of heavy network load.

### Edge device

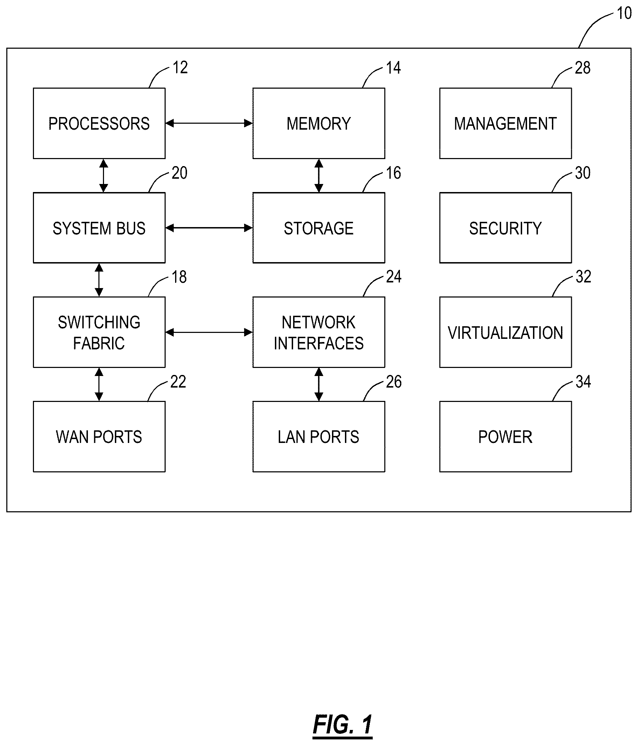

FIG. 1 illustrates a block diagram of an example edge device 10, highlighting various functional components. As shown, the edge device 10 includes processors 12, memory 14, storage 16, and a switching fabric 18, with the switching fabric 18 connected to the processors 12 and storage 16 via a system bus 20. The switching fabric 18 interconnects WAN ports 22 with network interfaces 24 that lead to LAN ports 26. In addition, the edge device 10 can incorporate management 28, security 30, virtualization 32, and power 34 subsystems. Those skilled in the art will appreciate that FIG. 1 is a conceptual representation focused on functionality; practical embodiments may include additional or alternative components (not shown). Furthermore, the edge device 10 can be implemented in a physical form factor that provides tangible WAN ports 22, LAN ports 26, and power 34 connections.

The processors 12 serve as the central intelligence of the edge device 10, providing both computational power and control logic. Implemented as multi-core CPUs or SoCs with integrated acceleration features, they run the network operating system, manage routing protocols, and coordinate inter-subsystem communications. These processors 12 enforce security policies, support virtualization 32 and orchestration functions, adapt to real-time network changes, and ensure efficient use of system resources. By overseeing the dynamic allocation of memory and bandwidth, interacting with external management systems, and maintaining routing and forwarding tables, the processors 12 enable the edge device 10 to deliver reliable, secure, and high-performance network services at the edge of the corporate infrastructure.

The memory 14 encompasses both volatile memory (e.g., DRAM) and non-volatile storage (e.g., NVRAM, Flash) arranged to meet the demands of high-performance, low-latency networking. The volatile memory provides rapid access to critical runtime data structures, including routing tables, address resolution protocol (ARP) caches, packet buffers, network address translation (NAT) session entries, and protocol state machines, enabling the processors 12 to quickly adapt to changing network conditions and ensure efficient traffic forwarding. The non-volatile memory preserves essential firmware images, configuration files, license keys, and security credentials across power cycles, allowing the edge device to reboot without losing its operational posture. This combination of volatile and non-volatile memory resources forms the foundational data layer that supports dynamic workloads, rapid decision-making, and resilient operation in today's complex, software-driven network environments.

The storage 16 subsystems, which may include solid-state drives (SSDs), eMMC modules, or other non-volatile media, offer persistent, long-term data retention and serve as a local repository for essential operational information. By archiving logs, historical performance metrics, network telemetry, configuration snapshots, and security signatures, the storage 16 enables the processors 12 to analyze trends, perform diagnostics, and refine policies without relying solely on external data sources. In addition, this local storage can host software images, firmware updates, containerized applications, and custom scripts, allowing rapid deployment of new features and swift recovery from system failures.

The switching fabric 18 is a high-speed, non-blocking internal interconnect that forms the core data forwarding plane of the edge device 10. It is typically implemented using dedicated application-specific integrated circuits (ASICs), field-programmable gate array FPGA-based logic, or advanced silicon designed for wire-speed packet processing. By handling packet switching, filtering, queuing, and routing decisions at hardware-driven line rates, the switching fabric 18 offloads intensive forwarding tasks from the processors 12, allowing them to focus on control-plane functions and policy enforcement. This architecture ensures efficient, low-latency traffic flow between WAN ports 22 and LAN ports 26, with the switching fabric 18 capable of dynamically balancing loads, applying QoS tags, and steering traffic to specialized modules or the processors 12 when deeper inspection or decision-making is required. The switching fabric 18 also interfaces with the system bus 20 to enable rapid data exchanges with storage 16, supporting advanced features like packet capture, analytics, and event logging. This high-performance, integrated design maintains stable throughput under fluctuating traffic conditions and evolving network topologies, delivering a scalable, resilient foundation for modern edge deployments.

The system bus 20 provides a communication pathway between the processors 12, storage 16, the switching fabric 18, and other components in the edge device 10. It transports commands, control messages, and data, enabling the processors 12 to coordinate packet processing, update routing tables, and access stored information. A well-designed system bus ensures low latency and high bandwidth, supporting real-time operations and high-speed packet handling.

The WAN ports 22 serve as the primary external conduits connecting the edge device 10 to a wide range of external networks-such as the public internet, corporate WAN links, or dedicated inter-site connections-enabling secure and efficient communication with remote locations, data centers, and cloud-based services. These interfaces may support various physical media, including fiber-optic cables for high-speed, long-distance connections; copper Ethernet links for more cost-effective installations; or integrated wireless modules that leverage cellular networks for backup or primary connectivity in regions lacking wired infrastructure. Furthermore, the WAN ports 22 often operate under diverse link-layer and routing protocols (e.g., MPLS, virtual private LAN Service (VPLS), point-to-point protocol over Ethernet (PPPoE), generic routing encapsulation (GRE) tunnels) and can integrate with advanced features like dynamic path selection, load balancing, and failover to enhance resilience and performance. Administrators can also implement traffic engineering, rate limiting, or QoS policies at the WAN interface level to optimize the user experience, reduce latency, and maintain service-level agreements. As a result, the WAN ports 22 provide a flexible, robust, and adaptable foundation for extending the enterprise's digital footprint, supporting the growth of distributed services, and meeting evolving network demands.

The network interfaces 24 provide the critical bridge between the edge device 10 and the local branch network environment, with each interface typically mapped to one or more LAN ports 26. These ports 26, which can range from a handful on small branch devices to dozens on larger enterprise-class platforms, physically or logically connect internal resources-such as workstations, servers, voice over Internet Protocol (VoIP) phones, Wi-Fi access points, and Internet-of-Things (loT) sensors-to the wider corporate infrastructure. LAN ports may offer copper (e.g., RJ-45) or fiber (e.g., SFP) options, and can be configured for virtual LAN (VLAN) segmentation to isolate traffic between different user groups or applications. They often support advanced features like PoE (Power over Ethernet) to power endpoint devices and link aggregation for increased throughput and redundancy.

Preserving these ports 26 for user and application traffic, rather than dedicating one solely for a high-availability (HA) link, makes operational and economic sense. By not consuming valuable ports 26 for HA connectivity, more interfaces remain available for scaling the network, deploying additional endpoint devices, or leveraging link aggregation to boost capacity. This flexibility ensures the edge device can accommodate growth, handle peak traffic, and maintain a robust, future-proof network design without unnecessary hardware expansion.

The management 28 functions include dedicated ports, consoles, and interfaces used by network administrators to configure, monitor, and troubleshoot the edge device. Management capabilities may also extend to software-based tools like web-based GUIs, APIs, or command-line interfaces (CLIs), as well as out-of-band (OOB) management for emergency access when the primary network is down. The security 30 components encompass integrated hardware and software solutions such as firewalls, intrusion detection/prevention systems, encryption/decryption engines, and trusted platform modules (TPMs). These components ensure that data moving through the edge device is protected against malicious activity, and that access controls, data loss prevention policies, and threat intelligence are consistently enforced.

The virtualization 32 layers support the hosting of virtual network functions (VNFs), containers, or SD-WAN logic on the edge device. This enables the dynamic deployment of services without needing additional physical appliances. By running multiple services (such as a firewall, WAN optimizer, or advanced analytics) virtually, the edge device 10 can quickly adapt to evolving network demands and integrate seamlessly with cloud-based orchestration and management platforms. The power 34 subsystem includes one or more power supplies (possibly with redundancy) that convert incoming electrical power (AC or DC) into the voltages and currents required by the device's electronics. Reliable, redundant power ensures continuous operation, even if one power supply unit fails, maintaining network uptime and service availability.

In summary, each of these components-processors, memory, storage, switching fabric, system bus, WAN and LAN interfaces, management, security, virtualization, and power-works together to create a high-performance, flexible, and secure edge platform. This unified architecture supports robust connectivity, streamlined traffic handling, integrated security, and simplified management at the branch edge.

### Functionality of the edge device

In an embodiment, the edge device 10 can be a "Branch Connector" available from Zscaler, Inc., the applicant of the present application. The Branch Connector is a network element designed to seamlessly extend cloud-based security and connectivity services to branch office locations. Think of it as a specialized on-premises device or virtual machine that sits at a branch site's network perimeter and securely directs all outbound internet-bound or inter-branch traffic to a distributed cloud platform for inspection, policy enforcement, and threat protection.

Key Characteristics and Functions include:
(1) Traffic Redirection to the Cloud: The primary role of a Branch Connector is to forward all branch-generated HTTP/HTTPS (and other supported protocols) traffic to the cloud for processing. Instead of backhauling branch office traffic to a central data center-an approach that can add latency and complexity-the Branch Connector provides a direct-to-cloud on-ramp. This improves performance, reduces WAN costs, and ensures that user traffic, regardless of its origin, consistently passes through the cloud's security stack.
(2) Simplified Branch Deployment: Traditional network security architectures require stacks of appliances-firewalls, proxies, URL filters, data loss prevention devices-at each site. The Branch Connector eliminates the need for multiple physical appliances at branch locations. By simply deploying a single connector device or virtual instance, organizations can use cloud services to enforce security and compliance policies uniformly across all branches, without the need to manage and update hardware at each location.
(3) Integration with Existing Infrastructure: The Branch Connector is designed to work with the organization's existing WAN infrastructure. It can integrate with routers, SD-WAN appliances, or network switches at the branch. When paired with SD-WAN solutions, for example, the Branch Connector ensures that traffic from each branch takes the optimal route-whether destined for the public internet or a corporate application accessible through secure cloud access.
(4) Centralized Policy and Visibility: Because the Branch Connector funnels traffic into a cloud platform, administrators gain a single point of management for policy definition, analytics, and reporting. This provides consistent security enforcement across all sites and the ability to quickly adapt policies globally from a cloud-based console, without physically touching branch-site equipment.
(5) Scalability and Elasticity: As an extension of a cloud-delivered service, the Branch Connector inherits the scalability and elasticity of the cloud platform. Adding new branches or adjusting capacity does not require re-architecting complex hardware setups; organizations simply deploy additional connectors and leverage the underlying cloud infrastructure to handle growth.

The Branch Connector acts as a secure "network gateway" element at branch offices. It simplifies network topologies, offloads security processing to the cloud, and provides unified policy enforcement, centralizing security management and ensuring better performance, consistency, and agility within a modern, cloud-driven enterprise networking strategy.

The Branch Connector can be deployed in various ways: as a standalone x86-based application, as a virtual machine (VM) running on dedicated host hardware, or as software co-residing on an existing network element at the branch site. In all such configurations, the total number of available ports 22, 26 is limited-often ranging from 8 to 16. For example, when integrated into an 8- to 16-port switch device (serving as the edge device 10) equipped with VLAN-aware interfaces, the Branch Connector can utilize existing LAN/WAN port configurations without requiring dedicated physical appliances. This approach leverages the device's multiple interfaces 22, 26 to provide flexible network segmentation and comprehensive traffic management. By consolidating functionality within a single network element, the Branch Connector reduces hardware complexity, streamlines deployment, and ensures that security, routing, and policy enforcement capabilities are consistently applied, all while preserving valuable port resources.

### Multiple edge devices

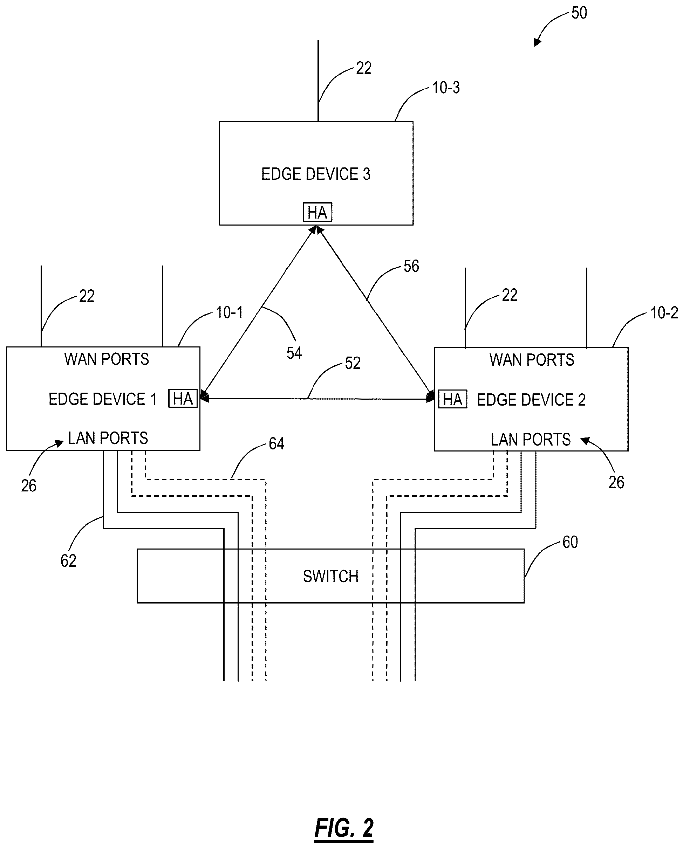

FIG. 2 illustrates a network diagram of an example branch network 50 employing a conventional, dedicated-link approach to high availability (HA) clustering. In this configuration, three edge devices 10-1, 10-2, 10-3 are interconnected via dedicated HA links 52, 54, 56, forming a resilient cluster designed to maintain connectivity and service continuity even if one device fails. Each HA link 52, 54, 56 provides a direct, point-to-point connection between a pair of edge devices 10-1, 10-2, 10-3 for exchanging heartbeat messages, synchronized session state information, and other critical failover data. By relying on these dedicated links 10-1, 10-2, 10-3, the cluster ensures that if a primary edge device unexpectedly becomes unavailable, the others can quickly assume its role, minimizing downtime and service interruptions.

Also depicted in FIG. 2 is a switch 60 connected to the LAN ports 26 of the edge devices 10-1, 10-2. This switch 60 distributes traffic from the branch's internal network 50 segments and enables the edge devices 10-1, 10-2, 10-3 to enforce policies, direct user traffic, and forward data to external destinations. The arrangement includes two active LAN segments 62 and two standby LAN segments 64, illustrating how the cluster can be configured to balance traffic load and provide redundancy at the access layer. The active segments 62 carry live network traffic, while the standby segments 64 remain prepared to take over if connectivity is lost on an active path.

Further, each of the edge devices 10-1, 10-2, 10-3 includes WAN ports 22 that link the branch network 50 to external networks, such as the internet or a corporate WAN. While not shown in detail, the branch network 50 may also encompass a wide array of additional devices and components-servers, wireless access points, security appliances, and more-that have been omitted here for simplicity. In practice, this conventional, dedicated-link HA setup ensures reliable failover and traffic continuity, but at the cost of consuming valuable physical ports and potentially increasing complexity in network design and management.

The HA links 52, 54, 56 are dedicated, direct connections between pairs of edge devices 10-1, 10-2, 10-3 that form a high-availability (HA) cluster. Their primary purpose is to ensure that these devices can continuously exchange vital state information, such as active session details, routing tables, policy enforcement settings, and system health data. By maintaining constant communication over these links 52, 54, 56, the cluster members can quickly detect when one device fails or becomes unreachable. Upon detecting such an event, the other devices in the cluster seamlessly take over the responsibilities of the failed device, minimizing downtime and maintaining uninterrupted network services.

However, relying on physical ports solely for HA connectivity has a significant drawback. Each dedicated HA link 52, 54, 56 consumes at least one valuable interface port on each connected device 10-1, 10-2, 10-3. These ports could otherwise be used to support additional LAN segments, attach new WAN circuits, or connect more user devices and applications. As a result, organizations may find themselves facing a trade-off: while dedicated HA links 52, 54, 56 improve network resilience and uptime, they also limit port availability, potentially increasing hardware costs and reducing the flexibility of the overall network architecture. This can be especially problematic in environments with constrained port density, where every interface is needed to scale network capacity, accommodate growth, and support evolving business requirements.

Another significant issue arises when the dedicated high-availability (HA) link 52, 54, 56 is limited to a fixed bandwidth-such as a single 10G line-while the total East-West traffic within the cluster exceeds that capacity. In a scenario where internal, East-West traffic (i.e., traffic flowing horizontally between devices within the same site or cluster) routinely surpasses 10 Gbps, the single dedicated HA link 52, 54, 56 can become a bottleneck. This line-rate limitation means that synchronization messages, stateful failover data, session updates, and other control-plane information cannot be transmitted as quickly as required, potentially resulting in delayed failovers or incomplete state replication. This bandwidth constraint also forces valuable 10G port resources to be tied up solely for HA connectivity, rather than contributing to the overall throughput available to user traffic. In other words, not only is the single 10G HA link insufficient for the data load, but it also prevents the reuse of that high-speed port for more flexible, aggregated links that could provide multiple paths, better redundancy, and greater total bandwidth. This static, single-link approach to HA connectivity can thus lead to inefficiencies, underutilized hardware, and degraded service continuity in high-volume East-West traffic environments.

### Transparent HA links virtually over the LAN port

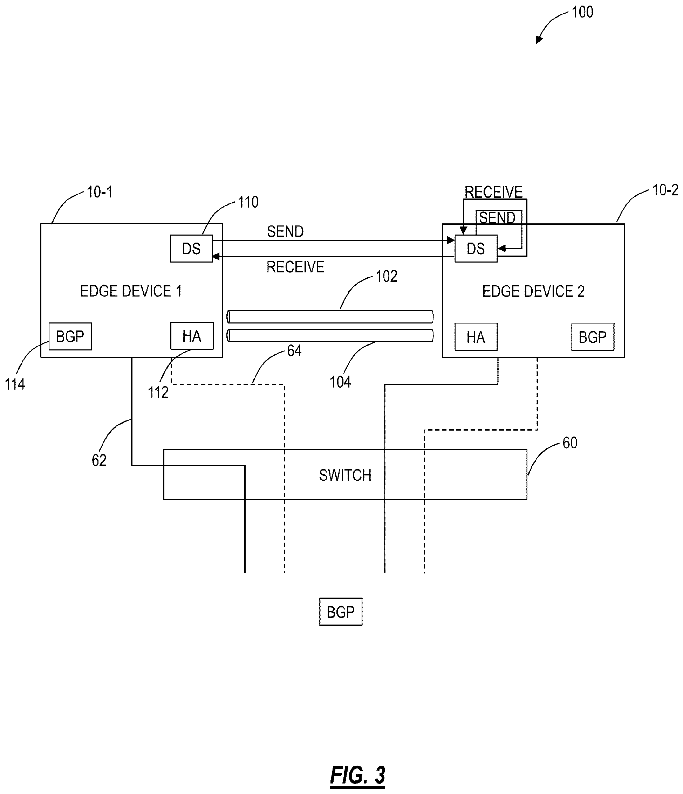

FIG. 3 illustrates a network diagram of an example branch network 100 that employs a transparent high-availability (HA) link approach for clustering multiple edge devices 10-1, 10-2. Unlike traditional architectures that rely on dedicated physical HA links, this configuration uses logical HA tunnels 102, 104 established over existing LAN segments-such as an active LAN segment 62 and a standby LAN segment 64-to ensure continuous service availability. By forming multiple tunnels across available LAN interfaces, the cluster gains built-in redundancy and can aggregate bandwidth from multiple links. This eliminates the need for dedicated HA ports, improving port utilization and flexibility. The approach also leverages NIC-level traffic steering so that HA control traffic can be isolated and prioritized in a dedicated hardware queue, preventing spikes in customer data traffic from overwhelming critical control-plane communications.

The edge devices 10-1, 10-2 incorporate three key functional components that enable transparent HA links: a Discovery Service (DS) 110, an HA service 112, and a BGP instance 114. Each of these components runs on the edge device 10 and contributes to the overall intelligence and adaptability of the transparent HA system.

This transparent HA methodology represents a more flexible and scalable alternative to traditional dedicated HA connections by leveraging existing LAN ports and advanced software mechanisms. Instead of allocating a single physical interface for state synchronization and failover messaging, all eligible LAN interfaces can be used to create a network of logical tunnels (e.g., 102, 104) for HA traffic. These tunnels dynamically adapt to topology changes and interface failures, ensuring that HA operations remain seamless and uninterrupted.

The Discovery Service (DS) 110 enables dynamic, automated cluster formation. When a device 10 powers up or joins the cluster, the DS 110 communicates with a Virtual IP (VIP) endpoint, providing its serial number, interface IP addresses, and HA capabilities. In return, the VIP supplies a list of all active devices and their reachable interfaces. With this information, each edge device gains a complete view of the cluster's topology and potential HA paths, eliminating the need for manually configured dedicated links.

Each edge device 10 also hosts a BGP instance 114, ensuring that the cluster's internal routing knowledge is both accurate and up-to-date. Through BGP sessions, the devices learn which interfaces and routes are optimal for reaching each other's IP addresses. Combining BGP intelligence with DS discovery data allows the cluster to identify the best interfaces for HA tunnels, ensuring that control-plane traffic is forwarded efficiently, even if certain interfaces fail or become congested.

After gathering topology data from the DS 110 and route information from the BGP instance 114, the HA service 112 creates logical tunnels 102, 104 over the LAN interfaces. These tunnels carry critical HA traffic-such as state synchronization messages, failover triggers, and session updates-across multiple parallel paths. If the primary tunnel experiences issues, the HA service 112 instantly reroutes traffic to a secondary tunnel without requiring manual intervention, maintaining synchronized state and consistent availability.

### Advantages of This Approach:

(1) Redundancy and Resilience: Multiple logical tunnels ensure that a single interface failure does not isolate the HA communications, thus preserving continuous high availability.
(2) Optimized Bandwidth Utilization: All available LAN interfaces can be leveraged, aggregating bandwidth and improving throughput for HA traffic, rather than consuming an entire high-speed port solely for HA.
(3) Port Efficiency and Scalability: With no dedicated HA links, valuable interfaces remain free for other functions (e.g., user traffic, WAN uplinks, additional LAN segments), making it easier to scale as business needs grow.
(4) Traffic Isolation and Prioritization: NIC-level traffic steering and dedicated CPU threads ensure that HA control messages maintain priority, preventing fluctuations in user traffic from degrading control-plane performance.

Integrating the Discovery Service, BGP instances, and an HA service to implement transparent HA links results in a more adaptive, robust, and efficient high-availability architecture. By removing the need for dedicated HA links, this approach simplifies network design, preserves port density, and enhances overall system performance.

Step-by-Step Setup and Operation of Transparent HA Links:
Step 1: Device Initialization: When an edge device boots up, it starts its core services. The DS 110 begins to announce the device's presence and discover its peers, while the BGP instance 114 awaits routing information. At this point, no HA tunnels exist; the device only knows its own IP addresses and configuration parameters.

Step 2: Cluster Discovery Using the VIP: The DS 110 queries the VIP endpoint, sending the device's serial number, interface IP addresses, and HA capabilities. The VIP responds with a list of cluster members and their interfaces. This information gives the device a holistic understanding of the cluster's members and their reachable interfaces.

Step 3: Receiving Cluster Topology Information: From the VIP response, the device now knows how many other devices are in the cluster and which interfaces they advertise for HA. This forms a topology map of potential HA paths.

Step 4: Routing Intelligence via BGP: Armed with peer interface addresses, the device's BGP instance 114 exchanges routing updates with other devices. It learns optimal routes, ensuring resilience if a particular interface becomes unreachable. This ensures the device always has multiple, viable paths to carry HA traffic.

Step 5: Identifying HA-Capable Interfaces: By combining DS topology data and BGP routing intelligence, the device identifies which LAN interfaces can support HA. This may include multiple ports, VLANs, or link aggregations, allowing flexible, multi-path HA connectivity.

Step 6: Creating Logical Tunnels: The HA service 112 sets up logical tunnels (e.g., GRE, VXLAN, IPsec) over the chosen LAN interfaces. Instead of a single dedicated HA cable, many parallel tunnels form a mesh of HA paths.

Step 7: Continuous HA Traffic Exchange: With tunnels established, devices exchange HA messages-synchronizing states, sessions, and failover triggers. A primary tunnel handles most traffic, while additional tunnels stand by to instantly take over if needed.

Step 8: NIC-Level Traffic Steering and Isolation: To maintain predictable performance, NIC hardware queues and dedicated CPU threads isolate and prioritize HA control traffic. Even if customer data traffic spikes, the HA messages continue to flow steadily, ensuring quick failover times.

Step 9: Dynamic Adjustments and Failover: As conditions change-new devices join, interfaces fail, or paths degrade-the DS and BGP instances update the topology and routing tables. The HA service 112 can add or remove tunnels, reroute traffic, and preserve high availability without manual intervention.

In summary, this transparent HA approach transforms what was once a static, dedicated HA link into a dynamic, multipath mesh of logical tunnels. By leveraging existing LAN interfaces, real-time discovery, routing intelligence, and robust HA services, the system delivers superior resilience, efficiency, and scalability while simplifying network infrastructure and preserving valuable port resources.

### Tunnels

In a transparent HA architecture, logical tunnels serve as virtualized communication pathways that carry control-plane messages-such as state synchronization, session updates, and failover triggers-across the existing LAN infrastructure. Rather than relying on a single dedicated HA cable, these tunnels can be formed on top of the same LAN segments used for normal user traffic, effectively overlaying HA communications on the available physical links. By doing so, the system can distribute HA traffic across multiple interfaces, provide inherent redundancy, and improve bandwidth efficiency.

### Key Characteristics of the Tunnels:

(1) Encapsulation Over LAN Segments: The tunnels operate by encapsulating HA traffic within a selected tunneling protocol. This encapsulation allows HA messages to be packaged and sent across LAN segments as if they were ordinary data packets. Because the underlying LAN is often Ethernet-based, the tunnels can ride over a wide range of physical and logical configurations (e.g., copper or fiber interfaces, VLANs, link aggregations), without requiring any specialized or dedicated wiring for HA.
(2) Multiple Parallel Paths: Each edge device can establish multiple tunnels to its peers by using all reachable LAN interfaces. For instance, if the edge device has four LAN ports and each can connect to a peer device's LAN infrastructure, then four parallel tunnels may be set up. Under normal conditions, one acts as the primary HA channel, while the others remain on standby. If the primary tunnel's interface experiences failure or congestion, the HA service seamlessly switches to another active tunnel, maintaining continuous and uninterrupted HA communication.
(3) Dynamic Routing and Failover: The tunnels are not statically configured; they rely on real-time topology and routing intelligence provided by the Discovery Service and BGP instances. This dynamic approach allows the system to adjust on the fly-adding or removing tunnels as new LAN segments become available or as existing paths degrade. Consequently, the network maintains optimal performance and resiliency without manual reconfiguration.

### Example Tunnel Types:

(1) GRE (Generic Routing Encapsulation): GRE is a simple, widely supported tunneling protocol used to encapsulate various network layer protocols inside virtual point-to-point links. In an HA scenario, GRE tunnels can be quickly set up between devices to carry control-plane packets over standard LAN segments.
(2) VXLAN (Virtual Extensible LAN): VXLAN is designed to create Layer 2 overlays over Layer 3 networks, frequently used in data center environments. By leveraging VXLAN, HA communications can be encapsulated and appear as if they are running on the same Layer 2 segment, even though the underlying LAN infrastructure might span multiple routed links. This can simplify network segmentation and reduce broadcast domain complexity.
(3) IPsec (IP Security): In situations where enhanced security is desired, IPsec tunnels can ensure that HA control traffic remains confidential and tamper-proof. IPsec provides authentication, encryption, and integrity checks, making it an ideal choice when sensitive operational data must be exchanged securely between cluster members, even if the LAN segments traverse untrusted intermediate networks or vulnerable links.
(4) TLS or DTLS-Based Overlays: Some environments may prefer TLS (Transport Layer Security) or DTLS (Datagram TLS) encapsulation for HA traffic. These protocols offer secure, encrypted channels resistant to eavesdropping or tampering. This can be particularly useful in edge deployments where LAN segments may extend over less secure links or where compliance mandates secure communication channels.

### Operation Over LAN Segments:

(1) Integration with VLANs and Link Aggregation: The tunnels can ride over VLAN-tagged sub-interfaces, allowing HA traffic to remain logically isolated from user traffic while still sharing the same underlying physical infrastructure. Combined with link aggregation (e.g., LACP), HA tunnels can benefit from increased throughput and load balancing across multiple physical links.
(2) End-to-End Visibility and Control: Because the tunnels are established at the edge devices, administrators have full visibility into the HA overlay network. They can monitor tunnel health, measure latency and packet loss, and apply QoS policies. If a particular LAN segment experiences congestion or quality issues, the system can reroute HA traffic to more stable paths.
(3) Seamless Changes and Scalability: As LAN segments evolve-new links added, existing links upgraded, VLAN assignments changed-the HA tunnels adapt without requiring a dedicated, single-purpose link to be re-provisioned. Scaling from a few ports to many, or reconfiguring the underlying LAN, does not disrupt HA communications. The system automatically redistributes the tunnels over available LAN segments.

### Process

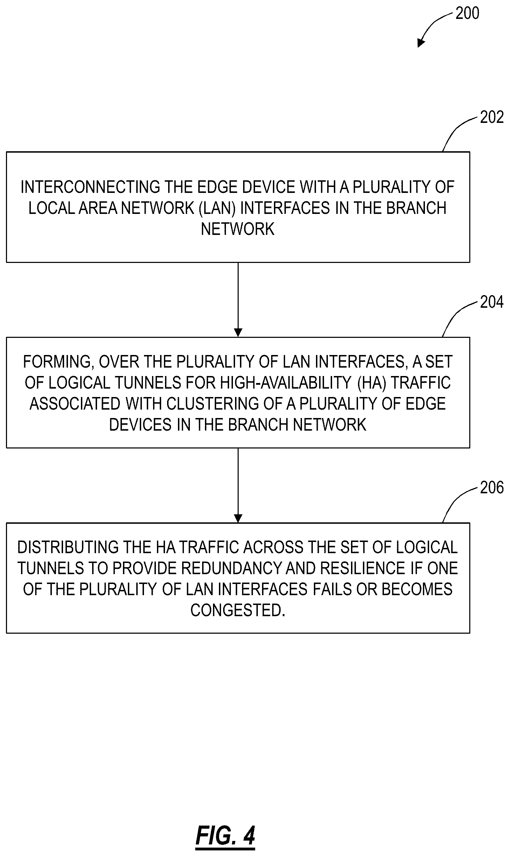

FIG. 4 illustrates a flowchart of a process 200 performed by an edge device situated at a branch network and connected to a wide area network (WAN). The process 200 can be embodied as a method executed by the edge device 10, as well as encoded in a non-transitory computer-readable medium containing instructions which, when executed by one or more processors or other circuitry of the edge device 10, cause the edge device to perform the described steps.

The steps include interconnecting the edge device with a plurality of local area network (LAN) interfaces in the branch network (step 202); forming, over the plurality of LAN interfaces, a set of logical tunnels for high-availability (HA) traffic associated with clustering of a plurality of edge devices in the branch network (step 204); and distributing the HA traffic across the set of logical tunnels to provide redundancy and resilience if one of the plurality of LAN interfaces fails or becomes congested (step 206).

The steps can further include communicating with a discovery service (DS) to obtain interface IP addresses of other edge devices in the cluster, thereby enabling dynamic identification of HA-capable interfaces and adjustment of the tunnels as network conditions change. The steps can further include executing a Border Gateway Protocol (BGP) instance to determine optimal routing paths for the HA traffic, thereby allowing the tunnels to adapt to changing topologies and interface reachability in real time.

The steps can further include utilizing multiple LAN ports simultaneously for HA control-plane communications, aggregating bandwidth and improving overall throughput, thereby mitigating potential performance bottlenecks associated with a single dedicated HA link. The steps can further include refraining from dedicating any LAN interface exclusively to HA connectivity, thereby allowing all LAN ports to be used for both user and HA traffic, increasing port utilization efficiency and preserving valuable interface capacity for scaling the branch network.

The steps can further include applying network interface controller (NIC)-level traffic steering and quality-of-service (QoS) mechanisms to isolate and prioritize HA control messages, ensuring that critical synchronization and failover signals are not delayed or disrupted by user data traffic spikes. Forming the logical tunnels includes establishing the logical tunnels using one or more encapsulation protocols selected from the group consisting of generic routing encapsulation (GRE), virtual extensible LAN (VXLAN), IPsec, and transport layer security (TLS)-based overlays.

The steps can further include continuously monitoring and maintaining synchronization of device states, session data, and policy information with other edge devices, and seamlessly switching HA traffic to alternate tunnels upon detecting interface failures, link degradation, or bandwidth constraints. The steps can further include integrating with various network components, including software-defined WAN (SD-WAN) appliances, routers, and switches, enabling the HA tunnels to operate transparently over VLANs, link aggregations, and different LAN segments, thereby supporting complex and evolving network topologies. The steps can further include dynamically adding, removing, or modifying the logical HA tunnels in response to real-time network conditions, cluster membership changes, or updated routing information, ensuring a robust, high-performance, and scalable HA architecture without necessitating dedicated physical HA links.

### Example sequence of the discovery process

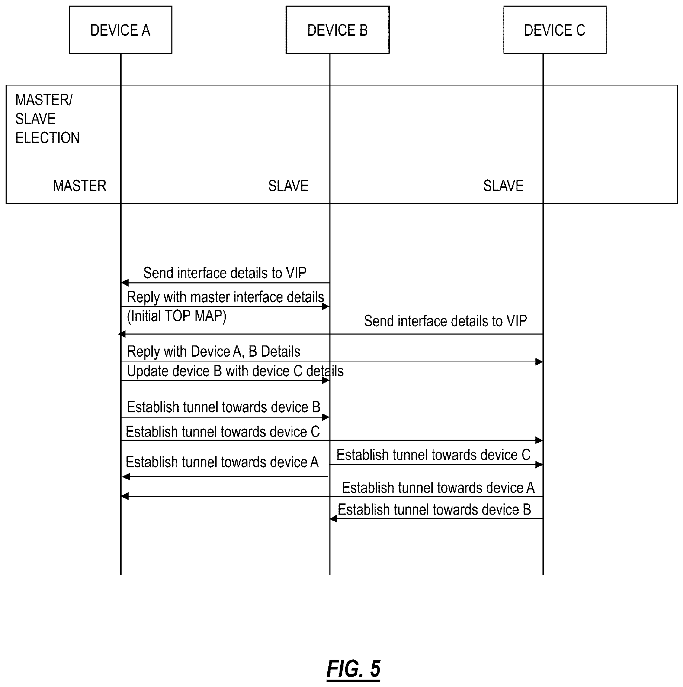

FIG. 5 illustrates a sequence diagram of an example discovery process. Again, the disclosure focuses on multi-link HA connectivity for "edge devices" in a branch network. Conventionally, clustering such devices for high availability requires dedicated direct links (so-called "HA ports"). This leads to wasted port capacity, higher hardware costs, and bandwidth bottlenecks if the single dedicated HA link becomes saturated. FIG. 5 shows how, instead of one physical HA link, each device A, B, C dynamically discovers all reachable interfaces among the other devices. Once discovered, the devices create logical tunnels that carry control-plane messages (for example, heartbeat and session synchronization) across multiple LAN ports. As a result, if one LAN interface fails or becomes congested, the high-availability communications simply move onto another active link-delivering far more resilience than a single dedicated cable.

Again, a Discovery Service (DS) gathers each device's interface IP addresses and capabilities, registers them to a Virtual IP (VIP) or central endpoint, and receives back a list of peers and reachable interfaces. The HA Service uses the discovery data to form logical tunnels with the other devices, prioritizes HA traffic via NIC-level mechanisms (so user data spikes do not overshadow critical HA messages), and monitors these tunnels and seamlessly reroutes HA traffic if one path degrades. A BGP Instance learns real-time routing information, keeps the devices informed of the best paths to reach each other, and helps direct HA traffic around interface failures or network congestion.

In FIG. 5, each device A, B, C is depicted with connectivity lines to the others-representing these tunnels that are formed after discovery completes. How FIG. 5 Illustrates the Discovery Process
(1) Initialization-Each edge device A, B, C boots up and activates its Discovery Service, HA Service, and BGP instance.
(2) Discovery & Topology Mapping-Via the Discovery Service (DS), each device announces itself to a shared VIP or similar mechanism. The VIP responds, telling Device A about Device B's and Device C's available interfaces, and similarly for the other devices.
(3) Routing Intelligence-Each device's BGP instance now exchanges routing information. This determines which interfaces are optimal for setting up HA tunnels.
(4) Tunnel Establishment-The HA Service on each device creates logical tunnels (e.g., GRE, VXLAN, IPsec) over LAN ports. These tunnels carry the control-plane data that ensures each device knows the others' session states, policies, and health.
(5) Ongoing Operation-If Device A loses connectivity on one LAN interface, the HA Service simply switches the tunnel to a different path. Likewise, if Device B's interface becomes congested, the traffic can move to a clearer path to maintain quick failover times.

Thus, a takeaway from FIG. 5 is that all three devices dynamically coordinate to form a mesh of logical tunnels over multiple LAN interfaces, ensuring redundancy and efficient HA communications-without sacrificing a dedicated physical port for high availability.

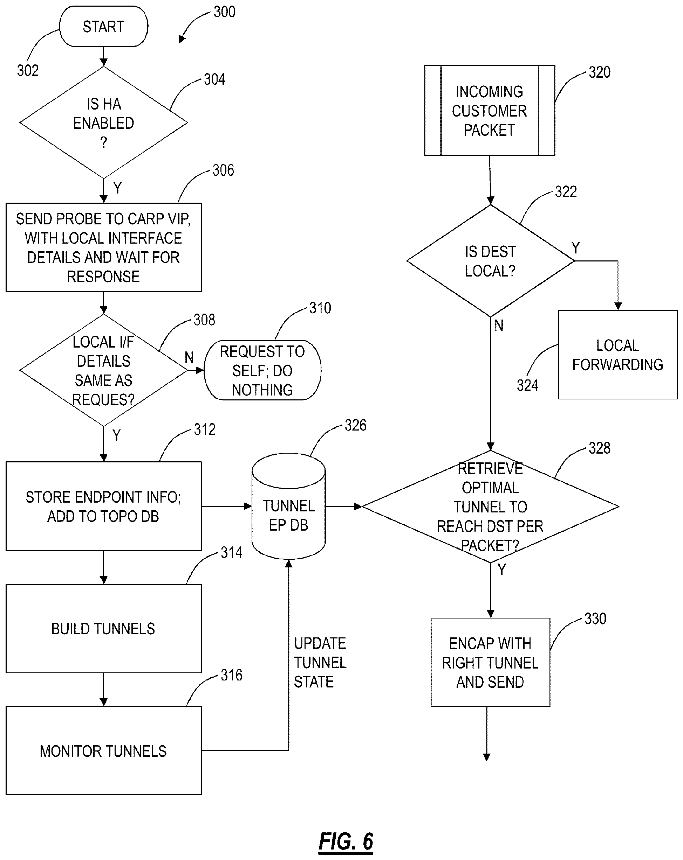

FIG. 6 illustrates a flowchart illustrating a process 300 of how an edge device (or similar node) both discovers peers for high availability (HA) tunnels and forwards customer traffic once the tunnels are established. The high-level idea is that the device:
(1) Checks if High Availability is enabled,
(2) Discovers other devices and builds tunnels with them,
(3) Monitors those tunnels, and
(4) Forwards incoming packets either locally or through the appropriate tunnel.

The process 300 begins when the device boots up or otherwise begins its HA functionality (step 302). The process 300 determines whether high availability is turned on (step 304). If HA is not enabled, the flow for establishing HA tunnels is skipped (the device continues normal operations without HA). If HA is enabled, the device proceeds to send a "probe" to discover its HA peers (step 306). The device sends a probe to a common address redundancy protocol (CARP) VIP with its local interface details. This is effectively saying, "Here are my network interfaces-who else is in the cluster?" The device waits for a response from that VIP, which may list other active devices/interfaces in the HA group.

The process 300 checks if the local interface (I/F) details are the same as in the request (step 308). When the device receives a response from the VIP, it checks whether the response is describing its own interfaces. If the response pertains to the same device (the probe loops back), the device ignores it. It doesn't need to build a tunnel to itself (step 310). If the information is from another peer in the cluster, the device stores that peer's endpoint details (IP addresses, capabilities) in its internal "topology database" (step 312). This step effectively updates the device's knowledge of who else is online, which interfaces they have, etc.

Using the newly updated endpoint or topology information, the device creates logical tunnels (e.g., GRE, VXLAN, IPSec, etc.) to each peer that is available for HA (step 314). This might involve negotiating cryptographic settings, choosing protocols, or configuring encapsulation. Once tunnels are up, the device keeps track of their status-latency, congestion, or failure. If a tunnel (or interface) goes down, the device can adjust accordingly (step 316).

On the right side of the flowchart, we see how the device handles normal (non-HA) packets once everything is operational. The device receives a packet from the LAN, WAN, or another interface that it must process (step 320). The device checks if the packet's destination is on one of its local subnets, or if it can be delivered internally (e.g., same LAN segment) (step 322). If yes, the device performs Local Forwarding (sends it directly to the local host) (step 324).

If Destination is Not Local, the device must figure out how to reach the remote destination-possibly across one of the HA tunnels if the destination is behind another cluster peer. Here, the device consults its "Tunnel Endpoint Database" (the "Tunnel EP DB") 326 or routing logic to decide which tunnel best reaches the destination (step 328). The device may also apply load-balancing or failover rules if it has multiple tunnels to the same peer. The packet is encapsulated in the selected tunnel protocol and forwarded across the appropriate logical tunnel to the next hop (which might be another HA peer or a remote gateway) (step 330).

### Processing circuitry and non-transitory computer-readable mediums

Those skilled in the art will recognize that the various embodiments may include processing circuitry of various types. The processing circuitry might include, but are not limited to, general-purpose microprocessors; central processing units (CPUs); digital signal processors (DSPs); specialized processors such as network processors (NPs) or network processing units (NPUs), graphical processing units (GPUs); field programmable gate arrays (FPGAs); programmable logic device (PLD), or similar devices. The processing circuitry may operate under the control of unique program instructions stored in their memory (software and/or firmware) to execute, in combination with certain non-processor circuits, either a portion or the entirety of the functionalities described for the methods and/or systems herein. Alternatively, these functions might be executed by a state machine devoid of stored program instructions, or through one or more application-specific integrated circuits (ASICs), where each function or a combination of functions is realized through dedicated logic or circuit designs. Naturally, a hybrid approach combining these methodologies may be employed. For certain disclosed embodiments, a hardware device, possibly integrated with software, firmware, or both, might be denominated as circuitry, logic, or circuits "configured to" or "adapted to" execute a series of operations, steps, methods, processes, algorithms, functions, or techniques as described herein for various implementations.

Additionally, some embodiments may incorporate a non-transitory computer-readable storage medium that stores computer-readable instructions for programming any combination of a computer, server, appliance, device, module, processor, or circuit (collectively "system"), each equipped with processing circuitry. These instructions, when executed, enable the system to perform the functions as delineated and claimed in this document. Such non-transitory computer-readable storage mediums can include, but are not limited to, hard disks, optical storage devices, magnetic storage devices, read-only memory (ROM), programmable read-only memory (PROM), erasable programmable read-only memory (EPROM), electrically erasable programmable read-only memory (EEPROM), flash memory, etc. The software, once stored on these mediums, includes executable instructions that, upon execution by one or more processors or any programmable circuitry, instruct the processor or circuitry to undertake a series of operations, steps, methods, processes, algorithms, functions, or techniques as detailed herein for the various embodiments.

### Conclusion

In this disclosure, including the claims, the phrases "at least one of" or "one or more of" when referring to a list of items mean any combination of those items, including any single item. For example, the expressions "at least one of A, B, or C," "at least one of A, B, and C," "one or more of A, B, or C," and "one or more of A, B, and C" cover the possibilities of: only A, only B, only C, a combination of A and B, A and C, B and C, and the combination of A, B, and C. This can include more or fewer elements than just A, B, and C. Additionally, the terms "comprise," "comprises," "comprising," "include," "includes," and "including" are intended to be open-ended and non-limiting. These terms specify essential elements or steps but do not exclude additional elements or steps, even when a claim or series of claims includes more than one of these terms.

Although operations, steps, instructions, blocks, and similar elements (collectively referred to as "steps") are shown or described in the drawings, descriptions, and claims in a specific order, this does not imply they must be performed in that sequence unless explicitly stated. It also does not imply that all depicted operations are necessary to achieve desirable results. In the drawings, descriptions, and claims, extra steps can occur before, after, simultaneously with, or between any of the illustrated, described, or claimed steps. Multitasking, parallel processing, and other types of concurrent processing are also contemplated. Furthermore, the separation of system components or steps described should not be interpreted as mandatory for all implementations; also, components, steps, elements, etc. can be integrated into a single implementation or distributed across multiple implementations.

While this disclosure has been detailed and illustrated through specific embodiments and examples, it should be understood by those skilled in the art that numerous variations and modifications can perform equivalent functions or achieve comparable results. Such alternative embodiments and variations, even if not explicitly mentioned but that achieve the objectives and adhere to the principles disclosed herein, fall within the spirit and scope of this disclosure. Accordingly, they are envisioned and encompassed by this disclosure and are intended to be protected under the associated claims. In other words, the present disclosure anticipates combinations and permutations of the described elements, operations, steps, methods, processes, algorithms, functions, techniques, modules, circuits, and so on, in any conceivable order or manner-whether collectively, in subsets, or individually-thereby broadening the range of potential embodiments.

## Claims

1. A method (200) performed by an edge device (10) disposed at a branch network (50, 100) and connected to a wide area network, WAN, via one or more WAN ports (22), the method comprising:
interconnecting (202) the edge device (10) with a plurality of local area network, LAN, interfaces (24) associated with a plurality of LAN ports (26) in the branch network (50, 100) (202);
forming (204), over the plurality of LAN interfaces (24), a set of logical tunnels (102, 104) for high-availability, HA, traffic associated with clustering of a plurality of edge devices (10-1, 10-2, 10-3) in the branch network (50, 100) (204); and
distributing (206) the HA traffic across the set of logical tunnels (102, 104) to provide redundancy and resilience if one of the plurality of LAN interfaces (24) fails or becomes congested (206).

2. The method (200) of claim 1, further comprising communicating with a discovery service, DS, (110) to obtain interface IP addresses of other edge devices in the cluster.

3. The method (200) of claim 2, further comprising executing a Border Gateway Protocol, BGP, instance (114) to determine routing paths for the HA traffic between the edge device (10) and the other edge devices in the cluster.

4. The method (200) of claim 1, wherein the HA traffic comprises HA control-plane communications, and wherein distributing the HA traffic comprises utilizing multiple LAN ports (26) simultaneously for the HA control-plane communications.

5. The method (200) of claim 1, wherein forming the set of logical tunnels (102, 104) comprises forming the set of logical tunnels without dedicating any of the LAN interfaces (24) exclusively to HA connectivity.

6. The method (200) of claim 1, further comprising applying network interface controller, NIC, level traffic steering and quality-of-service, QoS, mechanisms to isolate and prioritize HA control messages.

7. The method (200) of claim 1, wherein forming the set of logical tunnels (102, 104) comprises establishing the set of logical tunnels using one or more encapsulation protocols selected from the group consisting of generic routing encapsulation, GRE, virtual extensible LAN, VXLAN, Internet Protocol security, IPsec, and transport layer security, TLS, based overlays.

8. The method (200) of claim 1, further comprising monitoring and maintaining synchronization of device states, session data, and policy information with the other edge devices in the cluster, and switching the HA traffic to an alternate logical tunnel of the set of logical tunnels (102, 104) upon detecting an interface failure, link degradation, or bandwidth constraint.

9. The method (200) of claim 1, further comprising integrating the set of logical tunnels (102, 104) with one or more network components comprising a software-defined wide area network, SD-WAN, appliance, a router, and a switch (60), such that the set of logical tunnels operates over one or more of a virtual LAN, VLAN, a link aggregation, and different LAN segments (62, 64).

10. The method (200) of claim 1, further comprising dynamically adding, removing, or modifying at least one logical tunnel of the set of logical tunnels (102, 104) in response to a change in network conditions, a change in cluster membership, or updated routing information determined by the BGP instance (114).

11. The method (200) of any one of claims 1 to 10, wherein communicating with the discovery service, DS, (110) comprises transmitting, to a virtual IP, VIP, endpoint, at least one of a serial number of the edge device (10), interface IP addresses of the LAN interfaces (24), and HA capability information, and receiving, from the VIP endpoint, a list identifying cluster members and reachable interfaces.

12. The method (200) of any one of claims 1 to 11, further comprising storing, in a topology database, endpoint details of the other edge devices in the cluster obtained via the discovery service, DS, (110), wherein the endpoint details comprise at least one of interface IP addresses and capability information.

13. The method (200) of any one of claims 1 to 12, wherein distributing the HA traffic across the set of logical tunnels (102, 104) comprises selecting, from a tunnel endpoint database (326), a tunnel endpoint for forwarding a packet received at the edge device (10) via one of the LAN ports (26), and encapsulating the packet according to a tunnel protocol associated with the selected tunnel endpoint.

14. The method (200) of any one of claims 1 to 13, further comprising monitoring a status of the logical tunnels (102, 104) and, in response to detecting that a first logical tunnel is unavailable, forwarding the HA traffic via a second logical tunnel that is determined to be available.

15. An edge device (10) disposed at a branch network (50, 100) and comprising circuitry configured to cause the edge device (10) to perform the method of any one of claims 1 to 14.
